# EUROPEAN PATENT APPLICATION

(11) **EP 4 632 984 A1**
(43) Date of publication of application: **15.10.2025**
(21) Application number: 25169079.8
(22) Date of filing: 08.04.2025
(51) Int. Cl.: H02J 1/08, H01M 8/249, H02J 1/14, H02J 7/00

(54) **AN ELECTRONICALLY COMMUTATED FUEL CELL SYSTEM**

(30) Priority: 08.04.2024 US 202463575989 P
(71) Applicant: Vertiv Corporation, Columbus, OH 43085 (US)
(72) Inventor: RATCLIFF, Gregory W., DELAWARE (US)
(74) Representative: Beal, James Michael

(57) **Abstract**

A fuel cell management system is disclosed herein. The fuel cell management system comprises: a first arrangement of fuel cells configured to provide a first voltage and a first current, where the first arrangement includes at least two fuel cells connected in series; a second arrangement of fuel cells configured to provide a second voltage and a second current, where the second arrangement includes at least two fuel cells connected in parallel; a plurality of switches coupled to fuel cells of the first arrangement and the second arrangement; and a control circuit configured to activate different switches of the plurality of switches to connect an output node of the fuel cell management system to one of a plurality of arrangements of fuel cells, where the plurality of arrangements of fuel cells includes the first arrangement and the second arrangement.

## Description

### CROSS REFERENCE TO RELATED APPLICATIONS

This Patent Application claims the benefit of U.S. Provisional Patent Application Serial No. 63/575,989 titled "An Electronically Commutated Fuel Cell System" filed April 8, 2024.

### FIELD

The following description relates to technology related to using electronic controls to manage the operation and output of fuel cells.

### BACKGROUND

Fuel cells can be integrated with power conversion systems like Uninterruptible Power Supplies (UPS) and inverters to convert DC output to AC power. This integration typically includes matching the DC voltage from the fuel cells to the required AC voltage and current levels for the connected system. The maximum power output of a fuel cell is constrained by a corresponding surface area, which limits the current associated with the fuel cell. Similarly, the voltage of a fuel cell is constrained by the rate and efficiency of the chemical reactions occurring within the fuel cell. These reactions convert a fuel, such as hydrogen, into electricity, heat, and water.

### SUMMARY

This disclosure relates generally to an electronically commutated fuel cell system.

An aspect of the disclosed embodiments includes a fuel cell management system. The fuel cell management system comprises: a first arrangement of fuel cells configured to provide a first voltage and a first current, wherein the first arrangement includes at least two fuel cells connected in series; a second arrangement of fuel cells configured to provide a second voltage and a second current, wherein the second arrangement includes at least two fuel cells connected in parallel; a plurality of switches coupled to fuel cells of the first arrangement and the second arrangement; and a control circuit configured to activate different switches of the plurality of switches to connect an output node of the fuel cell management system to one of a plurality of arrangements of fuel cells, wherein the plurality of arrangements of fuel cells includes the first arrangement and the second arrangement resulting in optimized power transfer to other systems.

Another aspect of the disclosed embodiments includes a method for operating a fuel cell management system. The method comprises: providing a first voltage and a first current from a first arrangement of fuel cells, wherein the first arrangement includes at least two fuel cells connected in series; providing a second voltage and a second current from a second arrangement of fuel cells, wherein the second arrangement includes at least two fuel cells connected in parallel; and activating different switches of a plurality of switches to connect an output node of the fuel cell management system to one of a plurality of arrangements of fuel cells, where the plurality of switches are coupled to fuel cells of the first arrangement and the second arrangement, and wherein the plurality of arrangements of fuel cells includes the first arrangement and the second arrangement.

Another aspect of the disclosed embodiments includes a fuel cell management system. The fuel cell management system comprises: a first arrangement of fuel cells configured to provide a first voltage and a first current, wherein the first arrangement includes at least two fuel cells connected in series; a second arrangement of fuel cells configured to provide a second voltage and a second current, wherein the second arrangement includes at least two fuel cells connected in parallel; a plurality of switches coupled to fuel cells of the first arrangement and the second arrangement; a control circuit configured to activate different switches of the plurality of switches to connect an output node of the fuel cell management system to one of a plurality of arrangements of fuel cells, wherein the plurality of arrangements of fuel cells includes the first arrangement and the second arrangement; and a power inverter circuit configured to generate an AC signal using at least one of the first voltage provided by the first arrangement of fuel cells or the second voltage provided by the second arrangement of fuel cells.

These and other aspects of the present disclosure are disclosed in the following detailed description of the embodiments, the appended claims, and the accompanying figures.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 generally illustrates a block diagram of an exemplary embodiment of an electronically commutated fuel cell system, according to the principles of the present disclosure.
FIG. 2 generally illustrates a block diagram of another exemplary embodiment of an electronically commutated fuel cell system, according to the principles of the present disclosure.
FIGS. 3a-3c generally illustrate different exemplary arrangements of fuel cells, according to the principles of the present disclosure.
FIG. 4 generally illustrates adjustment of fuel cells between arrangements through the activation and deactivation of switches coupled to fuel cells of a fuel cell management system.
FIG. 5 depicts a flowchart of an exemplary method for operating an electronically commutated fuel cell system, according to an example embodiment.
FIG. 6 is a block diagram of an example computing device that may be used to implement embodiments, according to the principles of the present disclosure.

Those skilled in the art will appreciate and understand that, according to common practice, various features of the drawings discussed below are not necessarily drawn to scale, and that dimensions of various features and elements of the drawings may be expanded or reduced to more clearly illustrate the embodiments of the present disclosure described herein.

### DETAILED DESCRIPTION

The following discussion is directed to various embodiments of the disclosure. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

The present disclosure and accompanying drawings disclose one or more embodiments that incorporate the features of the present disclosure. The scope of the present disclosure is not limited to the disclosed embodiments. The disclosed embodiments merely exemplify the present disclosure, and modified versions of the disclosed embodiments are also encompassed by the present disclosure. Embodiments of the present disclosure are defined by the claims appended hereto.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described.

In the discussion, unless otherwise stated, adjectives such as "substantially," "approximately," and "about" modifying a condition or relationship characteristic of a feature or features of an embodiment of the disclosure, are understood to mean that the condition or characteristic is defined to be within tolerances that are acceptable for operation of the embodiment for an application for which it is intended.

Furthermore, it should be understood that spatial descriptions (e.g., "above," "below," "up," "left," "right," "down," "top," "bottom," "vertical," "horizontal," etc.) used herein are for purposes of illustration only, and that practical implementations of the structures described herein can be spatially arranged in any orientation or manner.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Numerous exemplary embodiments are described as follows. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

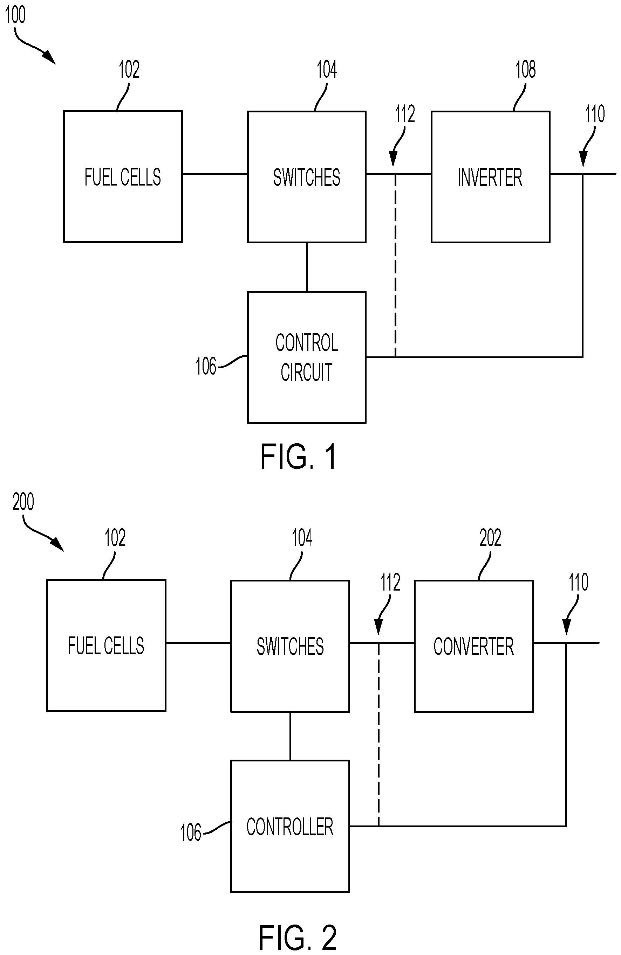

FIG. 1 generally illustrates a block diagram of an electronically commutated fuel cell system, also referred to herein as a fuel cell management system, according to the principles of the present disclosure. As generally illustrated in FIG. 1, a fuel cell management system 100 includes a plurality of fuel cells 102, a plurality of switches 104, a control circuit 106, and an inverter, 108 and an algorithm to manage and control the position, duration, and switching time of the switches.

Each fuel cell of the plurality of fuel cells 102 may be configured to provide a voltage and a current. More specifically, each fuel cell of the plurality of fuel cells 102 may be configured to produce a certain voltage and current based on its construction and materials used. The voltage is determined by the electrochemical potential of the fuel cell's materials, while the current is dependent on the surface area of the electrodes and the rate at which the chemical reaction occurs within the cell.

Further, each fuel cell of the plurality of fuels cells 102 may be arranged in one or more of a plurality of arrangements of fuel cells. To enable this, each switch of the plurality of switches 104 may be coupled to one or more fuel cells of the plurality of fuel cells 102, and the control circuit 106 may be configured to activate different switches of the plurality of switches 104 to connect an output node 112 to one of the plurality of arrangements of fuel cells. In accordance with embodiments disclosed herein, the plurality of switches 104 may include any of the following: mechanical switches, relays, transistors (such as Bipolar Junction Transistors or Field-Effect Transistors), thyristors, solid state relays, or Insulated Gate Bipolar Transistors.

For example, one arrangement of the plurality of arrangements of fuel cells may include at least two fuel cells connected in series. As another example, another arrangement of the plurality of arrangements of fuel cells may include at least two fuel cells connected in parallel. Still yet, as another example, another arrangement of the plurality of arrangements of fuel cells may include a hybrid configuration of some fuel cells in parallel and some fuel cells in series. When multiple fuels cells are configured together, connecting fuel cells in series sums their voltages and connecting fuel cells in parallel sums their currents. Moreover, by combining fuel cells in series and parallel (i.e., a series-parallel configuration), a fuel cell stack can be tailored to provide the desired total voltage and current output for a particular application resulting in the ideal transfer of power.

In some embodiments, the control circuit 106 is further configured to activate different switches of the plurality of switches 104 based on a measurement of output node 112. For example, the control circuit 106 may manage which of these switches of the plurality of switches 104 are activated at any given time. In some embodiments, this may be determined based on a measurement at the output node 112, which may be indicative of a voltage, a current, or power demand on the fuel cell management system 100. More specifically, the control circuit 106 may continuously monitor conditions at the output node 112. Depending on the measurement, the control circuit 106 may activate or deactivate different switches of the plurality of switches 104. Based on the different switches of the plurality of switches 104 that are activated or deactivated, a particular arrangement of fuel cells of the plurality of arrangements of fuel cells is connected to the output node 112, which may affect an output of the fuel cell management system 100 (such as providing more or less voltage or current).

Additionally, or alternatively, the control circuit 106 may manage which of these switches of the plurality of switches 104 are activated or deactivated based on a measurement at an output node 110, which is a point where the fuel cell management system 100 delivers power to a load. In some embodiments, the control circuit 106 is configured to wait a predetermined amount of time after detecting the measurement at the output node 112 before activating or deactivating switches to connect the output node 110 to a new arrangement of fuel cells.

Through this process, the fuel cell management system 100 can adapt to varying loads and conditions. For example, if the load requires more power, the control circuit 106 may activate or deactivate switches, via the algorithm of fuel cell management system 100, to connect output node 112 to another arrangement of the plurality of arrangements of fuel cells to optimize the transfer of power. The other arrangement may include more fuel cells in series to provide a higher voltage. In addition to, or conversely, if the load requires more power, the control circuit 106 may activate or deactivate switches to connect output node 112 to another arrangement of the plurality of arrangements of fuel cells, which may include more fuel cells in parallel to provide a higher current. For overall more power, which is the product of voltage and current, both voltage and current may be increased by connecting output node 112 to another arrangement of the plurality of arrangements of fuel cells, which may include some fuel cells in parallel and some fuel cells in series.

The power inverter circuit 108 is configured to generate an AC signal using DC signal generated by the plurality of fuel cells 102. This process involves changing the unidirectional flow of electrons in the DC signal into the sinusoidal waveform. The power inverter circuit 108 may achieve this by rapidly switching the DC voltage on and off and varying the width of the pulses in a process known as pulse-width modulation (PWM). By adjusting the duty cycle of these pulses, the power inverter circuit 108 can effectively simulate the rise and fall of voltage in AC power. The resulting waveform, after smoothing and filtering, can closely approximate the sine waves that powers various electrical devices. As inverters are constant power devices, in that if the voltage decreases, inverters current demands increase and they produce a fixed AC output regulated voltage for a necessary power load. For this reason, the fuel cell management system 100 capability of optimum matching transfers the most power to the inverter.

FIG. 2 generally illustrates a block diagram of an alternative fuel cell management system. As generally illustrated in FIG. 2, similar to fuel cell management system 100 in FIG. 1, a fuel cell management system 200 includes the plurality of fuel cells 102, the plurality of switches 104, and the control circuit 106. Additionally, or alternatively, the fuel cell management system 200 includes a converter 202. For example, the converter 202 may include a DC to DC converter that is configured to change a DC voltage level outputted by the plurality of fuel cells 102 to another DC voltage level, which can either be a step-up (boost) or a step-down (buck).

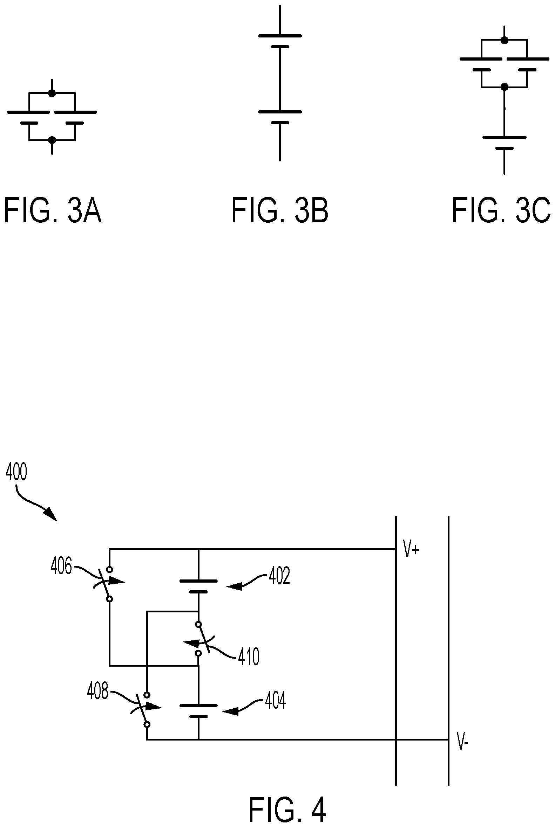

FIGS. 3a-3c illustrate different exemplary arrangements of fuel cells. FIG. 3a represents an arrangement of fuel cells including two fuel cells connected in parallel. In this configuration, the voltage across each cell remains the same, but the current capacity is the sum of both cells, which may be beneficial when a higher power output is needed without increasing the voltage.

FIG. 3b represents an arrangement of fuel cells including two fuel cells connected in series. This configuration increases the voltage output to the sum of both fuel cells, while maintaining the same current capacity as that of a single cell. This is useful for applications that may require higher voltage levels for operation.

FIG. 3c represents an arrangement of fuel cells in a hybrid configuration, where two fuel cells are in parallel and a fuel cell is in series with the two fuel cells in parallel. This configuration may increase both the voltage and the current capacity of the fuel cell management system 100.

FIG. 4 illustrates adjustment of fuel cells between arrangements through the activation and deactivation of switches coupled to fuel cells of a fuel cell management system. In FIG. 4, a fuel cell management system 400 includes fuel cells 402 and 404 and switches 406, 408, and 410. The fuel cells 402 and 404 may be connected in either a series or a parallel configuration, as determined by the switches 406, 408, and 410. This flexibility allows for adapting an output of the fuel cell management system 400 to meet varying power demands.

For a series connection, the switch 410 is closed to connect a positive terminal of fuel cell 402 to a negative terminal of fuel cell 404 and switches 406 and 408 are open. In this configuration, the voltages of the two fuel cells add up, while the current output is limited to the current capacity of one cell.

For a parallel connection, the switches 406 and 408 are closed, linking corresponding positive and negative terminals of the fuel cells 402 and 404 and switch 410 is open. This configuration allows the current from each cell to combine, providing a greater total current to a load while a voltage remains at the level of a single cell. Although FIG. 4 depicts the fuel cell management system 400 including two fuel cells and three switches, it should be noted that this is just one possible configuration. Other exemplary embodiments of a fuel cell management system may include any number of fuel cells and switches to suit different power requirements and operational complexities.

In some embodiments, the fuel cell management system 400 may be configured to enhance the longevity of the fuels cells 402. For example, if any fuel cells of the fuel cell management system 400 have failed, the failed fuel cells can be bypassed. Additionally, weak cells could be arranged in parallel to appear as a stronger fuel cell.

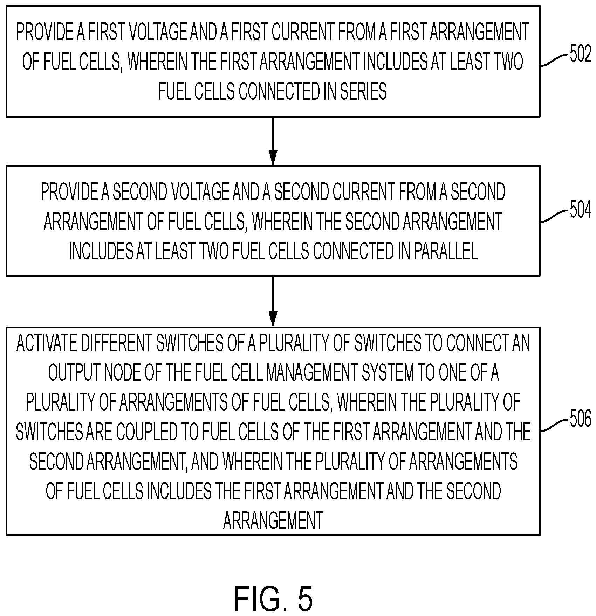

To explore this in further detail, FIG. 5 is described. FIG. 5 depicts a flowchart 500 of a method for operating an electronically commutated fuel cell system, according to an example embodiment. As shown in FIG. 5, the method of flowchart 500 begins at step 502. In step 502, a first voltage and a first current are provided from a first arrangement of fuel cells, where the first arrangement includes at least two fuel cells connected in series.

At step 504 in flowchart 500, a second voltage and a second current are provided from a second arrangement of fuel cells, wherein the second arrangement includes at least two fuel cells connected in parallel.

At step 506 in flowchart 500, different switches of a plurality of switches are activated to connect an output node of the fuel cell management system to one of a plurality of arrangements of fuel cells. The plurality of switches are coupled to fuel cells of the first arrangement and the second arrangement, and the plurality of arrangements of fuel cells includes the first arrangement and the second arrangement.

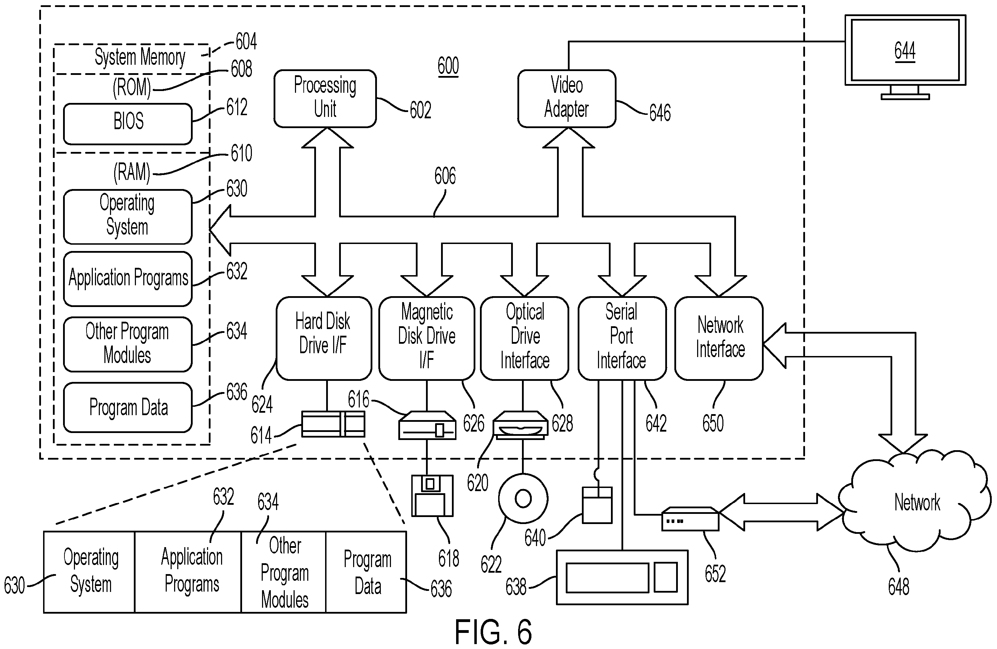

FIG. 6 depicts an example processor-based computer system 600 that may be used to implement various embodiments described herein, such as any of the embodiments described in the above where the switch algorithm is implemented and in reference to FIGS. 1-5. For example, processor-based computer system 600 may be used to implement any of the components of the fuel cell management system 100 as described above in reference to FIGS. 1-5. The description of processor-based computer system 600 provided herein is provided for purposes of illustration and is not intended to be limiting. Embodiments may be implemented in further types of computer systems, as would be known to persons skilled in the relevant art(s).

As shown in FIG. 6, processor-based computer system 600 includes one or more processors, referred to as processor circuit 602, a system memory 604, and a bus 606 that couples various system components including system memory 604 to processor circuit 602. Processor circuit 602 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 602 may execute program code stored in a computer readable medium, such as program code of operating system 630, application programs 632, other programs 634, etc. Bus 606 represents one or more of any of several types of bus structures, including a memory bus or memory controller, a peripheral bus, an accelerated graphics port, and a processor or local bus using any of a variety of bus architectures. System memory 604 includes read only memory (ROM) 608 and random access memory (RAM) 610. A basic input/output system 612 (BIOS) is stored in ROM 608.

Processor-based computer system 600 also has one or more of the following drives: a hard disk drive 614 for reading from and writing to a hard disk, a magnetic disk drive 616 for reading from or writing to a removable magnetic disk 618, and an optical disk drive 620 for reading from or writing to a removable optical disk 622 such as a CD ROM, DVD ROM, or other optical media. Hard disk drive 614, magnetic disk drive 616, and optical disk drive 620 are connected to bus 606 by a hard disk drive interface 624, a magnetic disk drive interface 626, and an optical drive interface 628, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 630, one or more application programs 632, other programs 634, and program data 636. Application programs 632 or other programs 634 may include, for example, computer program logic (e.g., computer program code or instructions) for implementing the systems described above, including the embodiments described in reference to FIGS. 1-5.

A user may enter commands and information into processor-based computer system 600 through input devices such as keyboard 638 and pointing device 640. Other input devices (not shown) may include a microphone, joystick, game pad, satellite dish, scanner, a touch screen and/or touch pad, a voice recognition system to receive voice input, a gesture recognition system to receive gesture input, or the like. These and other input devices are often connected to processor circuit 602 through a serial port interface 642 that is coupled to bus 606, but may be connected by other interfaces, such as a parallel port, game port, or a universal serial bus (USB).

A display screen 644 is also connected to bus 606 via an interface, such as a video adapter 646. Display screen 644 may be external to, or incorporated in processor-based computer system 600. Display screen 644 may display information, as well as being a user interface for receiving user commands and/or other information (e.g., by touch, finger gestures, virtual keyboard, etc.). In addition to display screen 644, processor-based computer system 600 may include other peripheral output devices (not shown) such as speakers and printers.

Processor-based computer system 600 is connected to a network 648 (e.g., the Internet) through an adaptor or network interface 650, a modem 652, or other means for establishing communications over the network. Modem 652, which may be internal or external, may be connected to bus 606 via serial port interface 642, as shown in FIG. 6, or may be connected to bus 606 using another interface type, including a parallel interface.

As used herein, the terms "computer program medium," "computer-readable medium," and "computer-readable storage medium" are used to generally refer to physical hardware media such as the hard disk associated with hard disk drive 614, removable magnetic disk 618, removable optical disk 622, other physical hardware media such as RAMs, ROMs, flash memory cards, digital video disks, zip disks, MEMs, nanotechnology-based storage devices, and further types of physical/tangible hardware storage media (including system memory 604 of FIG. 6). Such computer-readable storage media are distinguished from and non-overlapping with communication media (do not include communication media). Communication media typically embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Embodiments are also directed to such communication media.

As noted above, computer programs and modules (including application programs 632 and other programs 634) may be stored on the hard disk, magnetic disk, optical disk, ROM, RAM, or other hardware storage medium. Such computer programs may also be received via network interface 650, serial port interface 642, or any other interface type. Such computer programs, when executed or loaded by an application, enable processor-based computer system 600 to implement features of embodiments discussed herein. Accordingly, such computer programs represent controllers of processor-based computer system 600.

Embodiments are also directed to computer program products comprising computer code or instructions stored on any computer-readable medium. Such computer program products include hard disk drives, optical disk drives, memory device packages, portable memory sticks, memory cards, and other types of physical storage hardware.

A fuel cell management system, comprises: a first arrangement of fuel cells configured to provide a first voltage and a first current, wherein the first arrangement includes at least two fuel cells connected in series; a second arrangement of fuel cells configured to provide a second voltage and a second current, wherein the second arrangement includes at least two fuel cells connected in parallel; a plurality of switches coupled to fuel cells of the first arrangement and the second arrangement; and a control circuit configured to activate different switches of the plurality of switches to connect an output node of the fuel cell management system to one of a plurality of arrangements of fuel cells, wherein the plurality of arrangements of fuel cells includes the first arrangement and the second arrangement resulting in optimized power transfer to other systems.

In the fuel cell management system referenced above, further comprises: a third arrangement of fuel cells configured to provide a third voltage and a third current, wherein the third arrangement includes a hybrid configuration of some fuel cells in parallel and some fuel cells in series, wherein the plurality of arrangements further includes the third arrangement.

In the fuel cell management system referenced above, the control circuit is further configured to activate the different switches of the plurality of switches based on a measurement of the output node.

In the fuel cell management system referenced above, the measurement is voltage.

In the fuel cell management system referenced above, the measurement is current.

In the fuel cell management system referenced above, the measurement is power.

In the fuel cell management system referenced above, the control circuit is further configured to activate the different switches of the plurality of switches based on a measurement of the output node after a predetermined amount of time.

In the fuel cell management system reference above, further comprises: a power inverter circuit configured to generate an AC signal using at least one of the first voltage provided by the first arrangement of fuel cells or the second voltage provided by the second arrangement of fuel cells.

The fuel cell management system referenced above, further comprises: a converter circuit configured to generate a DC output voltage signal based on at least one of the first voltage provided by the first arrangement of fuel cells or the second voltage provided by the second arrangement of fuel cells.

A method for operating a fuel cell management system, the method comprises: providing a first voltage and a first current from a first arrangement of fuel cells, wherein the first arrangement includes at least two fuel cells connected in series; providing a second voltage and a second current from a second arrangement of fuel cells, wherein the second arrangement includes at least two fuel cells connected in parallel; and activating different switches of a plurality of switches to connect an output node of the fuel cell management system to one of a plurality of arrangements of fuel cells, wherein the plurality of switches are coupled to fuel cells of the first arrangement and the second arrangement, and wherein the plurality of arrangements of fuel cells includes the first arrangement and the second arrangement.

The method of referenced above further comprises: providing a third voltage and a third current from a third arrangement of fuel cells, wherein the third arrangement includes a hybrid configuration of some fuel cells in parallel and some fuel cells in series, wherein the plurality of arrangements further includes the third arrangement.

The method referenced above further comprises: activating the different switches of the plurality of switches based on optimum needs of the output node.

In the method referenced above, the measurement is voltage.

In the method referenced above, the measurement is current.

In the method referenced above, the measurement is power.

In the method referenced above further comprises: activating the different switches of the plurality of switches based on a measurement of the output node after a predetermined amount of time.

The method referenced above further comprises: generating an AC output signal using at least one of the first voltage provided by the first arrangement of fuel cells or the second voltage provided by the second arrangement of fuel cells.

The method referenced above further comprises: generating a DC output voltage signal based on at least one of the first voltage provided by the first arrangement of fuel cells or the second voltage provided by the second arrangement of fuel cells.

A fuel cell management system, comprises: a first arrangement of fuel cells configured to provide a first voltage and a first current, wherein the first arrangement includes at least two fuel cells connected in series; a second arrangement of fuel cells configured to provide a second voltage and a second current, wherein the second arrangement includes at least two fuel cells connected in parallel; a plurality of switches coupled to fuel cells of the first arrangement and the second arrangement; a control circuit configured to activate different switches of the plurality of switches to connect an output node of the fuel cell management system to one of a plurality of arrangements of fuel cells, wherein the plurality of arrangements of fuel cells includes the first arrangement and the second arrangement; and a power inverter circuit configured to generate an AC signal using at least one of the first voltage provided by the first arrangement of fuel cells or the second voltage provided by the second arrangement of fuel cells.

In the fuel cell management system referenced above, the control circuit is further configured to activate the different switches of the plurality of switches based on a measurement of the output node.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present disclosure and do not limit the present disclosure. On the contrary, the disclosure is intended to cover various modifications and equivalent arrangements included within the scope of the appended claims, which scope is to be accorded the broadest interpretation to encompass all such modifications and equivalent structure as is permitted under the law.

The disclosure comprises the following items:
1. A fuel cell management system, comprising:
   a first arrangement of fuel cells configured to provide a first voltage and a first current, wherein
   the first arrangement includes at least two fuel cells connected in series;
   a second arrangement of fuel cells configured to provide a second voltage and a second current, wherein the second arrangement includes at least two fuel cells connected in parallel;
   a plurality of switches coupled to fuel cells of the first arrangement and the second arrangement; and
   a control circuit configured to activate different switches of the plurality of switches to connect an output node of the fuel cell management system to one of a plurality of arrangements of fuel cells, wherein the plurality of arrangements of fuel cells includes the first arrangement and the second arrangement resulting in optimized power transfer to other systems.
2. The fuel cell management system of item 1, further comprising:
   a third arrangement of fuel cells configured to provide a third voltage and a third current,
   wherein the third arrangement includes a hybrid configuration of some fuel cells in parallel and some fuel cells in series, wherein the plurality of arrangements further includes the third arrangement.
3. The fuel cell management system of item 1 or item 2, wherein the control circuit is further configured to activate the different switches of the plurality of switches based on a measurement of the output node.
4. The fuel cell management system of any preceding item, wherein the measurement is voltage.
5. The fuel cell management system of any preceding item, wherein the measurement is current.
6. The fuel cell management system of any preceding item, wherein the measurement is power.
7. The fuel cell management system of any preceding item, wherein the control circuit is further configured to activate the different switches of the plurality of switches based on a measurement of the output node after a predetermined amount of time.
8. The fuel cell management system of any preceding item, further comprising:
   a power inverter circuit configured to generate an AC signal using at least one of the first voltage provided by the first arrangement of fuel cells or the second voltage provided by the second arrangement of fuel cells.
9. The fuel cell management system of any preceding item, further comprising:
   a converter circuit configured to generate a DC output voltage signal based on at least one of the first voltage provided by the first arrangement of fuel cells or the second voltage provided by the second arrangement of fuel cells.
10. A method for operating a fuel cell management system, the method comprising:
   providing a first voltage and a first current from a first arrangement of fuel cells, wherein the first arrangement includes at least two fuel cells connected in series;
   providing a second voltage and a second current from a second arrangement of fuel cells,
   wherein the second arrangement includes at least two fuel cells connected in parallel; and
   activating different switches of a plurality of switches to connect an output node of the fuel cell management system to one of a plurality of arrangements of fuel cells, wherein the plurality of switches are coupled to fuel cells of the first arrangement and the second arrangement, and
   wherein the plurality of arrangements of fuel cells includes the first arrangement and the second arrangement.
11. The method of item 10, further comprising:
   providing a third voltage and a third current from a third arrangement of fuel cells, wherein the third arrangement includes a hybrid configuration of some fuel cells in parallel and some fuel cells in series, wherein the plurality of arrangements further includes the third arrangement.
12. The method of item 10 or item 11, further comprising:
   activating the different switches of the plurality of switches based on a measurement of the output node.
13. The method of any of items 10-12, wherein the measurement is voltage.
14. The method of any of items 10-13, wherein the measurement is current.
15. The method of any of items 10-14, wherein the measurement is power.
16. The method of any of items 10-15, further comprising:
   activating the different switches of the plurality of switches based on a measurement of the output node after a predetermined amount of time.
17. The method of any of items 10-16, further comprising:
   generating an AC output signal using at least one of the first voltage provided by the first arrangement of fuel cells or the second voltage provided by the second arrangement of fuel cells.
18. The method of any of items 10-17, further comprising:
   generating a DC output voltage signal based on at least one of the first voltage provided by the first arrangement of fuel cells or the second voltage provided by the second arrangement of fuel cells.
19. A fuel cell management system, comprising:
   a first arrangement of fuel cells configured to provide a first voltage and a first current, wherein the first arrangement includes at least two fuel cells connected in series;
   a second arrangement of fuel cells configured to provide a second voltage and a second current, wherein the second arrangement includes at least two fuel cells connected in parallel;
   a plurality of switches coupled to fuel cells of the first arrangement and the second arrangement;
   a control circuit configured to activate different switches of the plurality of switches to connect an output node of the fuel cell management system to one of a plurality of arrangements of fuel cells, wherein the plurality of arrangements of fuel cells includes the first arrangement and the second arrangement; and
   a power inverter circuit configured to generate an AC signal using at least one of the first voltage provided by the first arrangement of fuel cells or the second voltage provided by the second arrangement of fuel cells.
20. The fuel cell management system of item 19, wherein the control circuit is further configured to activate the different switches of the plurality of switches based on a measurement of the output node.

## Claims

1. A fuel cell management system, comprising:
a first arrangement of fuel cells configured to provide a first voltage and a first current, wherein the first arrangement includes at least two fuel cells connected in series;
a second arrangement of fuel cells configured to provide a second voltage and a second current, wherein the second arrangement includes at least two fuel cells connected in parallel;
a plurality of switches coupled to fuel cells of the first arrangement and the second arrangement; and
a control circuit configured to activate different switches of the plurality of switches to connect an output node of the fuel cell management system to one of a plurality of arrangements of fuel cells, wherein the plurality of arrangements of fuel cells includes the first arrangement and the second arrangement resulting in optimized power transfer to other systems.

2. The fuel cell management system of claim 1, further comprising:
a third arrangement of fuel cells configured to provide a third voltage and a third current, wherein the third arrangement includes a hybrid configuration of some fuel cells in parallel and some fuel cells in series, wherein the plurality of arrangements further includes the third arrangement.

3. The fuel cell management system of claim 1 or claim 2, wherein the control circuit is further configured to activate the different switches of the plurality of switches based on a measurement of the output node.

4. The fuel cell management system of claim 3, wherein the measurement is voltage.

5. The fuel cell management system of claim 3, wherein the measurement is current.

6. The fuel cell management system of claim 3, wherein the measurement is power.

7. The fuel cell management system of any of claims 3-6, wherein the control circuit is further configured to activate the different switches of the plurality of switches based on the measurement of the output node after a predetermined amount of time.

8. The fuel cell management system of any preceding claim, further comprising:
a power inverter circuit configured to generate an AC signal using at least one of the first voltage provided by the first arrangement of fuel cells or the second voltage provided by the second arrangement of fuel cells.

9. The fuel cell management system of any preceding claim, further comprising:
a converter circuit configured to generate a DC output voltage signal based on at least one of the first voltage provided by the first arrangement of fuel cells or the second voltage provided by the second arrangement of fuel cells.

10. A method for operating a fuel cell management system, the method comprising:
providing a first voltage and a first current from a first arrangement of fuel cells, wherein the first arrangement includes at least two fuel cells connected in series;
providing a second voltage and a second current from a second arrangement of fuel cells, wherein the second arrangement includes at least two fuel cells connected in parallel; and
activating different switches of a plurality of switches to connect an output node of the fuel cell management system to one of a plurality of arrangements of fuel cells, wherein the plurality of switches are coupled to fuel cells of the first arrangement and the second arrangement, and wherein the plurality of arrangements of fuel cells includes the first arrangement and the second arrangement.

11. The method of claim 10, further comprising:
providing a third voltage and a third current from a third arrangement of fuel cells, wherein the third arrangement includes a hybrid configuration of some fuel cells in parallel and some fuel cells in series, wherein the plurality of arrangements further includes the third arrangement.

12. The method of claim 10 or claim 11, further comprising:
activating the different switches of the plurality of switches based on a measurement of the output node, and optionally wherein:
the measurement is voltage; or
the measurement is current; or
the measurement is power.

13. The method of claim 12, further comprising:
activating the different switches of the plurality of switches based on the measurement of the output node after a predetermined amount of time.

14. The method of any of claims 10-13, further comprising:
generating an AC output signal using at least one of the first voltage provided by the first arrangement of fuel cells or the second voltage provided by the second arrangement of fuel cells.

15. The method of any of claims 10-14, further comprising:
generating a DC output voltage signal based on at least one of the first voltage provided by the first arrangement of fuel cells or the second voltage provided by the second arrangement of fuel cells.
